(19) Europäisches Patentamt
European Patent Office
Office européen des brevets

(11) **EP 2 778 732 B1**

(12) **EUROPEAN PATENT SPECIFICATION**

(45) Date of publication and mention
of the grant of the patent:
**30.09.2015 Bulletin 2015/40**

(51) Int Cl.:
*G02B 7/00* (2006.01)    *G02B 3/02* (2006.01)
*G02B 3/08* (2006.01)    *G02B 13/14* (2006.01)
*G02B 27/00* (2006.01)

(21) Application number: **13460040.2**

(22) Date of filing: **27.06.2013**

(54) **Refractive optical element having a convex helical surface for athermalizing an infrared imaging system**

Refraktives Optischen Element mit einer convexen spiralförmigen Oberfläche zur Athermalisation einem Infrarot-Abbildungssystem

Elément optique réfractif ayant une surface convexe hélicoidale pour l'athermalisation d'un imageur infrarouge

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2013 PL 40307913**

(43) Date of publication of application:
**17.09.2014 Bulletin 2014/38**

(73) Proprietor: **Instytut Optyki Stosowanej**
**03-805 Warszawa (PL)**

(72) Inventors:
• **Sypek, Maciej**
**00-801 Warszawa (PL)**
• **Blocki, Narcyz**
**01-577 Warszawa (PL)**
• **Kolodziejczyk, Andrzej**
**00-403 Warszawa (PL)**
• **Jaroszewicz, Zbigniew**
**03-659 Warszawa (PL)**

(74) Representative: **Woznicki, Jerzy**
**Patent Attorney**
**Al. Niepodleglosci 222 kl. A lok. 20**
**00-663 Warszawa (PL)**

(56) References cited:
GB-A- 1 367 889       US-A- 4 925 281
US-A1- 2004 091 218   US-A1- 2010 329 605

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The object of the invention is a refractive optical element for athermalization of thermovision imaging systems. The element is intended to be installed in FLIR (Forward Looking Infrared) imaging systems applied in object detection, identification and monitoring devices.

Object imaging in FLIR thermovision optical systems requires thermal signature mapping of an object located practically at infinity onto an infrared sensor array. Concerning thermal optics, significant dependence of an imaging element material refractive index and temperature is a great problem. An optical system set to infinity creates an object image at a focal distance from the principal plane. Refractive indices of imaging system optical elements significantly change with temperature which results in a significant modification of the imaging focal length. That is why the image loses its sharpness and contrast at a given sensor array position.

There are some known arrangements of thermovision imaging systems with an additional optical element used to provide athermalization. Such an optical element changes the imaging system setup and the distances between its elements. In the arrangement presented in US 6262844 patent description, a diffractive optical element with a stepped surface composed of concentric planar zones is used for athermalization of the imaging system. In the arrangement presented in US 5808799 patent description, an additional optical element has a surface including a set of concentric rings in the form of a kinoform, phase plate or similar optical element of specific phase modulation.

Publication GB 1 367 889 A discloses an element of particular interest.

In the above arrangement, the additional optical element is an integral part of the imaging system and requires precise fitting to the remaining elements of the system. The elements are usually equipped with additional electromechanical components used in the optical system. Such components and external elements are prone to damage, particularly at high overloads which, in the event of damage, necessitates a replacement of the complete imaging system.

A refractive optical element for athermalization of thermovision imaging systems of a variable focal length made of a body with a circular base, according to the invention, is characterized in that the element is a cap component mounted in a detachable manner to the imaging system, whereas its face surface has a profile of a convex outline with a radial jog spirally ascending from the lower edge to the upper edge of the jog, and the phase transmittance of the refractive optical element in the direction perpendicular to the base coinciding with the imaging system optical axis is described by the following equation:

$$T(r,\theta) = \exp\left[ik\left((\Delta f\theta/2\pi) - \sqrt{r^2 + (f_0 + \Delta f\theta/2\pi)^2} + \sqrt{r^2 + f_0^2}\right)\right]$$

where:

| | |
|---|---|
| $\Delta f$ | the required range of the focal length sector; |
| $f_0$ | the focal length of the imaging system; |
| $r, \theta$ | the radial and angular coordinate in the polar coordinate system; |
| $k=2\pi/\lambda, \lambda$ | the average electromagnetic wavelength for the optical element operating wave range. |

It is advantageous if successive radial sectors of the body have an increasing height of the convex profile and decreasing curvature towards the body axis centre over the entire helicoidal pitch determining the profile side edge ascending in relation to the base from the lower edge to the upper edge of the jog.

The required range of the focal length sector $\Delta f$ is needed to compensate focal shift caused by temperature changes.

Unlike the existing optical athermalization elements, the optical element, in accordance with the invention, has no rotational symmetry and its modulation transfer function does not indicate any oscillations or nulls in the spatial frequency range of the transfer spectrum. The optical element, according to the invention, does not significantly degrade the image because it has no spatial frequency values which revert contrast in the imaging but ensures extension of the optical system focus to section $\Delta f$ located on the optical axis. In consequence, any temperature changes which cause the focal length shifts do not significantly affect the quality of the thermal signature imaging of an object located at infinity. In the arrangement, in accordance with the invention, the optical element is a cap mounted in a detachable manner to a FLIR optical system which facilitates its application without a necessity of disassembling and reconfiguring a part of the system. An important advantage of the proposed arrangement is no need to use any additional electromechanical components or feedbacks which significantly raise the cost of the device and deteriorate its reliability. The proposed cap is designed mainly for use in a range of electromagnetic wavelength of 3-5 μm or 7-15 μm described as so called infrared windows, however, it may also be applied in other ranges of the electromagnetic spectrum where athermalization of an optical system is required.

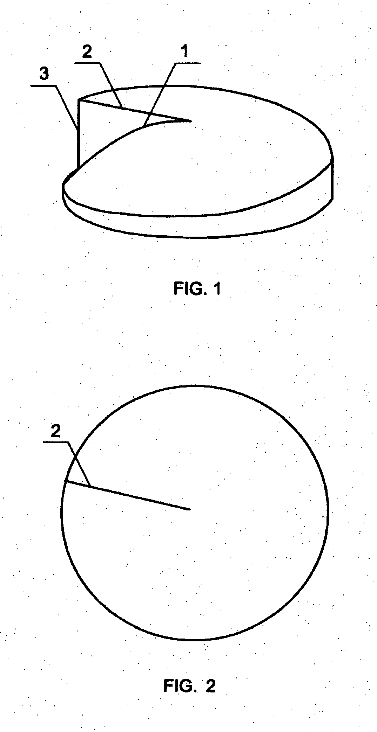

The is presented in exemplary drawing in which fig. 1 shows an optical element for athermalization of thermovision imaging systems in a perspective view, and fig. 2 which shows the same element in top view.

As shown in fig. 1 and 2, a refractive optical element for athermalization of thermovision imaging systems is made of a body of a circular base. Its face surface has a profile of a convex outline with a radial jog which ascends helically from the lower edge 1 to the upper edge 2 of the jog. The jog has a side edge 3 whose top in connected to the upper edge 2 reaching the element centre. The upper edge 2 is almost horizontal. The lower edge 1 connects the lower end of the side edge 3 and the end of the upper edge 2 beginning from the face surface centre in the optical element optical axis. Successive radial sectors of the body have an increasing height of the convex profile and decreasing curvature towards the body axis centre over the entire helicoidal pitch determining the profile side edge ascending in relation to the base from the lower edge 1 to the upper edge 2 of the jog. The optical element of a variable focal length formed in this way is a cap element mounted in a detachable manner from the outside to the imaging system on an extension of its optical axis. The phase transmittance of the optical element in the direction perpendicular to the base coinciding with the imaging system optical axis is described by the following equation:

$$T(r,\theta) = \exp\left[ik\left((\Delta f\theta/2\pi) - \sqrt{r^2 + (f_0 + \Delta f\theta/2\pi)^2} + \sqrt{r^2 + f_0^2}\right)\right]$$

where:

$\Delta f$     the required range of the focal length sector;
$f_0$     the focal length of the imaging system;
$r, \theta$ the     radial and angular coordinate in the polar coordinate system;
$k=2\pi/\lambda, \lambda$     the average electromagnetic wavelength for the optical element operating wave range.

The cap, according to the invention, is applied in a FLIR thermovision optical system of a focal ratio F#=1 and focal length $f_0$=35 mm, operating in the band of 7-15 μm. To adapt the cap element for operation in a band of 7-15μm, the cap element is made of germanium. For operation in other ranges of electromagnetic waves, the cap element may be made of other optically active materials. The accepted range of the temperature changes for athermalization was $T_0$ = -50 °C to T 1 == +80 °C.

The phase transmittance of the optical element including the cap element is described by the following equation:

$$T(r,\theta) = \exp\left(ik\left(-\sqrt{r^2 + (f_0 + \Delta f\theta/2\pi)^2} + f_0 + (\Delta f\theta/2\pi)\right)\right)$$

The transfer function of the optical element described by the above equation, in the imaging system, provides a focal line in a range of one helicoidal pitch. An extension of the focal segment of a FLIR imaging system by 1% of the focal length (34.65mm ÷ 35mm) is sufficient for the object image on the detector array to be sufficiently sharp in the examined temperature range from $T_o$ = -50 °C to $T_1$ = +80 °C and the band of 7-15μm. The cap element performing a 1% extension of the focal segment in a selected optical system has a 15μm helicoidal pitch, which corresponds to the height of the side edge 3 shown in fig. 1 and changes the optical power of the system from 0 to 0.29D, where D stands for dioptres.

The optical element, according to the invention, may be formed as a refractive element, Fresnel element or kinoform of any order and may be applied for any electromagnetic wavelength, where optical system athermalization is required. As a cap to an imaging system, it provides achromatic operation of an optical system in a wavelength range of 3-5 μm or 7-15 μm and makes it possible to obtain imaging of a thermal signature of the examined object of sufficient quality in a temperature range from -50 °C to +80 °C. As a result, it provides athermalization of a FLIR system without a need to use any additional mechanical, pneumatic or electronic components.

**Claims**

1. A refractive optical element for athermalization of a thermal imaging system of a variable focal length made of a body with a circular base **characterized in that** the element is a cap component mounted in a detachable manner to the imaging system output, whereas its surface has a convex profile with a radial jog helically ascending from the lower edge (1) to the upper edge (2) of the jog, wherein its phase transmittance in a direction perpendicular to the base coinciding with the imaging system optical axis is described by the following equation:

$$T(r,\theta) = \exp\left[ik\left((\Delta f\theta/2\pi) - \sqrt{r^2 + (f_0 + \Delta f\theta/2\pi)^2} + \sqrt{r^2 + f_0^2}\right)\right],$$

where:

$\Delta f$ the required range of the focal length sector;
$f_0$ the focal length of the imaging system;
$r, \theta$ the radial and angular coordinate in the polar coordinate system;
$k=2\pi/\lambda, \lambda$ the average electromagnetic wavelength for the optical element operating wave range.

2. The refractive optical element, according to claim 1, wherein the successive radial sectors of the body have an increasing height of the convex profile and decreasing curvature towards the body axis centre over the entire helicoidal pitch determining the profile side edge ascending in relation to the base from the lower edge (1) to the upper edge (2) of the jog.

**Patentansprüche**

1. Refraktäres optisches Element für die Athermalisierung des thermographischen Abbildungssystem mit einer variablen Brennweite, aus einer Form mit kreisförmigen Basis hergestellt, **dadurch gekennzeichnet, dass** es ein Aufsatzelement ist und lösbar an dem Ausgang des Abbildungssystems montiert wird, wobei seine Oberfläche ein konvexes Profil mit einer radialen Abstufung hat, der spiral ab dem unteren Rand (1) bis dem oberen Rand (2) der Abstufung steigt, wobei seine Phasen-Transmittanz in der senkrechten Richtung zu der Basis, die mit der optischen Achse des Abbildungssystems zusammenfällt, wird durch die folgende Formel beschrieben:

$$T(r,\theta) = \exp\left[ik\left((\Delta f\theta/2\pi) - \sqrt{r^2 + (f_0 + \Delta f\theta/2\pi)^2} + \sqrt{r^2 + f_0^2}\right)\right],$$

wo

$\Delta f$ erforderlicher Umfang des Brennweitenabschnitts
$f_0$ Brennweite des Abbildungssystems
$r, \theta$ Radial- und Winkelkoordinate im Polarsystem
$k=2\pi/\lambda, \lambda$ die durchschnittliche Länge der elektromagnetischen Welle, für den Bereich der Arbeitswellen des optischen Elements.

2. Refraktäres optisches Element nach Anspruch 1, **dadurch gekennzeichnet, dass** die aufeinanderfolgenden radialen Ausschnitte der Form eine steigende Profilhöhe mit einer konvexen Umriss haben und einem absteigenden Krümmungsradius in Richtung der Mitte der Formachse im gesamten Bereich des Sprungs der Schraubenlinie, die die Seitenkante des Profils definiert, die sich relativ zu der Basis von der unteren Kante (1) bis der oberen Kante des Sprunges (2) steigt.

**Revendications**

1. L'élément optique réfractif pour athermalisation du système d'imagerie thermique à focale variable, effectué d'un bloc à base circulaire, **caractérisé en ce qu'**il constitue l'élément capteur relié de manière amovible à la sortie du système d'imagerie, où sa surface présente un profil convexe avec une faille radiale montant en hélice depuis le bord inférieur (1) vers le bord supérieur (2) de la faille, où sa transmittance en phases vers la direction perpendiculaire à la base, coïncidant avec l'axe optique du système d'imagerie, est décrite par la formule:

$$T(r,\theta) = \exp\left[ik\left((\Delta f\theta/2\pi) - \sqrt{r^2 + (f_0 + \Delta f\theta/2\pi)^2} + \sqrt{r^2 + f_0^2}\right)\right],$$

où

$\Delta f$ étendue requise de la section focale;
$f_0$ focale du système d'imagerie;
$r, \theta$ coordonnée radiale et angulaire dans un système polaire;
$k=2\pi/\lambda,$ $\lambda$ durée moyenne de l'onde électromagnétique pour l'étendue des ondes de travail de l'élément optique.

2. L'élément optique réfractif selon la revendication 1, **caractérisé en ce que** les segments successifs radiaux du bloc ont la hauteur du profil croissante avec le contour convexe et la courbure décroissante vers le centre de l'axe du bloc sur toute l'étendue du saut de la ligne hélicoïdale définissant le profil du bord latéral croissant par rapport à la base depuis le bord inférieur (1) vers le bord supérieur (2) de la faille.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6262844 B
- US 5808799 A

- GB 1367889 A